Europäisches Patentamt

European Patent Office

Office européen des brevets

(11) Publication number: **0 054 887**
**B1**

# EUROPEAN PATENT SPECIFICATION

(45) Date of publication of patent specification: **02.03.88**

(21) Application number: **81110451.2**

(22) Date of filing: **15.12.81**

(51) Int. Cl.⁴: **F 02 M 7/00**, G 01 F 5/00, F 02 D 41/18

(54) **Air flow meter assembly.**

(30) Priority: **22.12.80 JP 182272/80**

(43) Date of publication of application:
**30.06.82 Bulletin 82/26**

(45) Publication of the grant of the patent:
**02.03.88 Bulletin 88/09**

(84) Designated Contracting States:
**DE FR GB**

(56) References cited:
**DE-A-2 914 275**
**DE-A-2 921 787**
**GB-A-2 025 062**

**Patent Abstracts of Japan vol. 4, no. 169, 21 November 1980 & JP-A-55-119925**

**Patent Abstracts of Japan vol. 4, no. 120, 26 August 1980 page 147M28 & JP-A-55-78164**

(73) Proprietor: **Hitachi, Ltd.**
**5-1, Marunouchi 1-chome**
**Chiyoda-ku Tokyo 100 (JP)**

(72) Inventor: **Kashiwaya, Mineo**
**1367, Tabiko**
**Katsuta-shi (JP)**
Inventor: **Yamada, Kinsaku**
**3-18-14, Higashioshimacho**
**Katsuta-shi (JP)**

(74) Representative: **Patentanwälte Beetz sen. -**
**Beetz jun. Timpe - Siegfried - Schmitt-Fumian**
**Steinsdorfstrasse 10**
**D-8000 München 22 (DE)**

## Description

The present invention relates to an air flow meter assembly according to the first part of claim 1.

The Japanese Patent Laying Open No. 55—37555 (March 15, 1980) discloses an air flow meter having a hot-wire disposed in a by-pass air passage provided in parallel with an air passage leading from an air cleaner and having a venturi portion and a throttle valve through which the air is supplied to the engine. An output signal from the hot-wire corresponds to the total air flow supplied to the engine through the air passage, and the output signal is delivered, for example, to a control unit for calculation of the optimum air-fuel ratio of the mixture. A fuel injector or a carburetor is controlled in accordance with the optimum air-fuel ratio calculated in the control unit, so that the mixture is fed to the engine at the optimized air-fuel ratio. This prior-art air flow meter, however, suffers the following disadvantages. Namely, the air flowing into the air passage through the air cleaner generates vortexes to form complicated stream lines. This turbulency of the air adversely affects the air flowing through the by-pass air passage to cause a disturbance of the output signal from the hot-wire, resulting in an incorrect indication of the air flow.

From the DE—A—2 921 787 it is known another air flow metering assembly for the air suction system of an internal combustion engine comprising a difference-pressure sensor and an air flow sensor each arranged in a separate by-pass passage. The inlet openings of said by-pass passages are disposed upstream of the venturi portion arranged in the main passage upstream of a throttle valve and the outlet opening of the by-pass passage of the air flow sensor opens in the smallest area of the venturi portion. For settling the air rate flowing in the by-pass passage of the air flow sensor by throttling means is disposed in the inlet of this by-pass passage. This throttling means causes turbulence of the incoming air flow which have disadvantageous influences upon the thermoresistance air flow sensor.

A further air flow metering assembly according to the first part of claim 1 is disclosed in the JP—A—55/119 925. The air cleaner of this suction system is connected with the main suction passage upstream of a venturi portion by a duct of plastic material. A by-pass passage formed in the venturi body is connected with the upper portion of said duct by a plastic pipe, to prevent sticking of carbon powder and the like on the air flow sensor formed as a hot-wire element, which is disposed in the by-pass passage inside of the venturi body. The plastic pipe is mechanically fixed on the venturi body around the inlet opening of the by-pass passage inside the venturi body and its length is more than twice as large as the diameter of the whole by-pass passage. It is disadvantageous in this assembly, that in the connection zone between the pipe and the passage in the venturi body will cause turbulences of the air flow in the surrounding of the air flow sensor, which prevents exactly measurements.

The object of the invention is to provide an air flow meter assembly capable of correctly detecting the air flow without being disturbed by the turbulency of the air flowing into the air passage and without a contamination of the detecting means by the carbon and oil particles.

To solve this object according to the invention there is provided an air flow meter assembly according the characterized features of claim 1.

Advantageous embodiments of the invention are defined in claims 2 and 3.

The above and other objects, as well as advantageous features of the invention will become clear from the following description of the preferred embodiments taken in conjunction with the accompanying drawings.

Fig. 1 is a sectional view of a hot-wire air flow meter assembly constructed in accordance with an embodiment of the present invention;

Fig. 2 is a sectional view of a modification of a pipe incorporated in the hot-wire air flow meter assembly as shown in Fig. 1; and

Figs. 3A and 3B are a sectional view and a top plan view of a hot-wire air flow meter assembly constructed in accordance with another embodiment of the present invention.

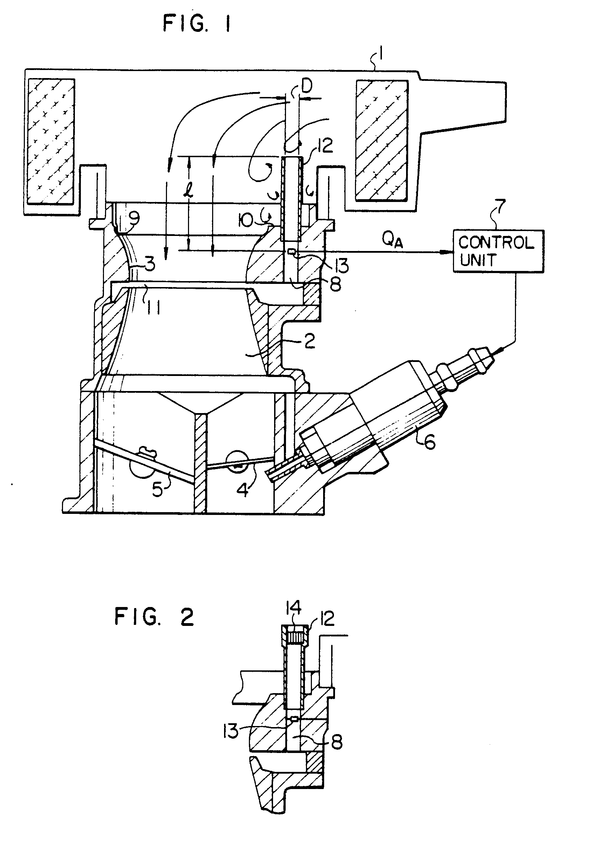

Referring first to Fig. 1, an air cleaner 1 is disposed on an air passage 2 provided with a venturi portion 3 formed on the inner peripheral surface at a mid portion thereof. Throttle valves 4, 5 and a fuel injector 6 are secured to the lower portion of the air passage 2.

The value of the air flow $Q_A$ is delivered to a control unit 7 which determines and sets the optimum air-fuel ratio (A/F) of the mixture supplied to the engine.

The housing including the air passage 2 and the venturi portion 3 is formed by, for example, a die-casting from aluminum, to have a portion 8 of a by-pass air passage formed near the venturi portion 3. Said portion 8 of the by-pass air passage has an inlet opening on a land 10 formed at one side of an air horn 9 on the top of the air passage 2 and an outlet opening communicated with the air passage 2 through a slit 11 formed in the throat section of the venturi portion 3. A pipe 12 forming the upper portion of the by-pass air passage made of, for example, a metallic material, is secured to the upper end of the lower portion 8 of the by-pass air passage. A heat-sensitive resistor body, i.e. a hot wire 13, is disposed in the lower portion 8 of the by-pass air passage. The hot-wire 13 is adapted to change its electric resistance in accordance with the change in the flow of air flowing therearound.

Although not shown, the hot-wire 13 disposed in the by-pass air passage is usually composed of two hot-wire elements which constitute two of four sides of a Wheatstone bridge circuit.

The air flow $Q_A$ flowing in the air passage 2 is usually determined by the throttle flaps 4, 5, and the air flow in the first by-pass air passage 8 is changed in proportion to the change in the flow $Q_A$ in the air passage 2. The hot wire which changes its resistance in response to the change in the flow of air in the lower portion 8 of the by-pass passage, therefore, can generate an output signal proportional to the flow of air supplied to the engine.

In general, in the air flow meter assembly having a by-pass air passage formed in parallel with an air passage, the air stream at the upstream portion of the by-pass air passage tends to be disturbed by, for example, vortexes.

The unfavourable influence of the turbulency of the air flow appearing in the upstream end portion of the by-pass air passage can be reduced to a negligibly small level by selecting the length l of the portion of the by-pass air passage upstream from the hot-wire 13 to be at least twice, preferably 5 to 10 times, as large as the diameter D of the by-pass air passage. On the other hand, the length of the by-pass air passage, particularly the length of the portion thereof upstream from the hot-wire, is limited by the size or the construction of the housing. It is, therefore, extremely difficult to obtain the desired length of that portion of the by-pass air passage.

In the embodiment described above, therefore, the metallic cylindrical pipe 12 is attached to the upstream inlet of the lower portion 8 of the by-pass air passage, in order to attain the desired length of the portion of the by-pass air passage upstream from the hot-wire. The pipe 12, however, may be formed from a material other than a metal and can have a cross-sectional shape other than circular. The pipe 12 has, however, an inner bore of a cross-section coinciding with the cross-section of the lower portion 8 of the by-pass air passage and, the cross-sectional area of the inner bore of the pipe 12 coincides with that of the lower portion 8 of the by-pass air passage, in order that the air flow in the by-pass air passage is not disturbed.

Referring to Fig. 2, a honey-comb-like flow settling grid 14 is provided at the upstream side end of the pipe 12 secured to the inlet of the lower portion 8 of the first by-pass air passage. This flow settling grid 14 effectively settles further the stream of air flowing in the by-pass air passage.

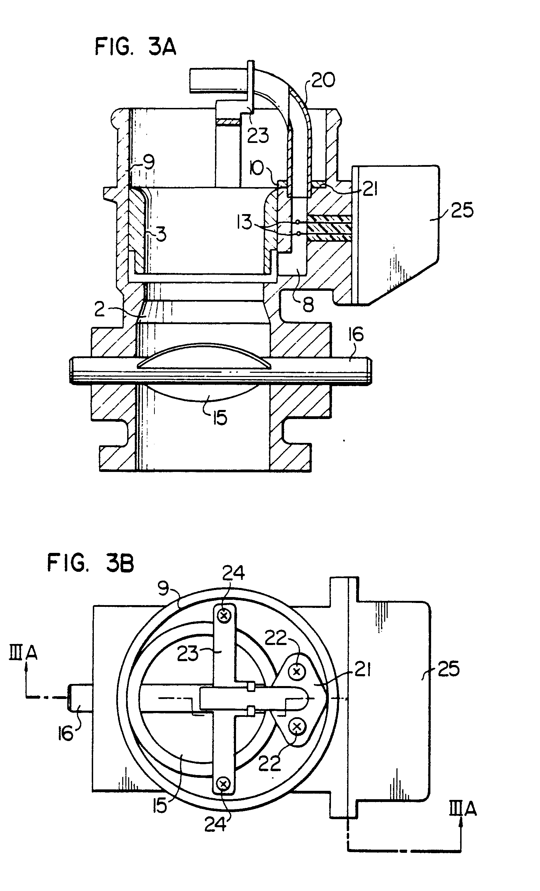

Figs. 3A and 3B show another embodiment of the invention. More specifically, Fig. 3A is a sectional view taken along the two-dots-and-dash line IIIA—IIIA of Fig. 3B. In these Figures, the same reference numerals are used to denote the same parts or members as those in the first embodiment shown in Fig. 1. In the hot-wire air flow meter assembly of the invention shown in Figs. 3A and 3B, a throttle valve 15 is mounted on a rotary shaft 16 disposed at the downstream side of the air passage 2, and acts to control the air flow supply to the engine. A fuel injector or a carburetor of the same type as that shown in Fig. 1 is secured to the lower portion of the throttle body having the throttle valve 15.

As will be seen from Figs. 3A, 3B, a pipe 20 forming an upper portion of the by-pass air passage bent at a predetermined curvature is attached to the inlet of the lower portion 8 of the first by-pass air passage. This pipe 20 is made of, for example, a metal and has a flange member 21 attached thereto by means of welding or the like measure. The pipe 20 having the flange 21 is firmly fixed to the land 10 of the throttle body by means of screws 22. Furthermore, a supporting member 23 of, for example, a metal is secured to the same land portion by means of screws 24 to support the bent pipe 20.

As will be seen from these Figures, the bent pipe 20 has an inlet opening residing in the area of the upper projection of the venturi portion 3 and extends in the plane substantially perpendicular to the axis of the venturi portion 3. The inlet opening of the pipe 20 opens on a straight line substantially perpendicular to the axis of the venturi portion 3.

Due to the bending of the pipe 20, carbon and oil particles having comparatively large inertia can hardly be introduced into the pipe 20, while the air having comparatively small inertia is allowed to easily come into the pipe 20. In consequence, the attaching of carbon and oil particles to the hot-wire 13, attributable to the back-fire and other phenomenon, can fairly be avoided to ensure a correct measuring of the airflow. The change in the resistance of the hot-wire 13 is detected by a detecting means 25 and is sent to the control unit.

According to the invention, it is possible to stabilize the flow of air in the by-pass air passage, particularly in the region around the hot-wire to achieve a stable heat transfer between the hot-wire and the air flowing therearound, so that the air flow can be detected at a high precision. In addition, it is possible to eliminate unfavourable effect of carbon and oil particles on the measurement of the air flow.

**Claims**

1. Air flow meter assembly for an air suction system of internal combustion engines comprising:

an air cleaner (1); a throttle valve (4); a suction passage (2) having a venturi portion upstream of the throttle valve; a by-pass passage (8, 12; 20), the inlet opening of which is disposed upstream of the venturi portion (3) and the outlet opening (11) of which opens in the venturi portion (3), and an air flow detecting element (13) constructed by a heat sensitive resistor and disposed in the by-pass passage (8, 12; 20), a portion of the by-pass passage on the upstream side of the detecting element being formed by a pipe (12, 20) and the length of the by-pass passage upstream of the detecting element being at least twice as large as the diameter (D) of the by-pass passage,

characterized in that

the pipe projects into the suction passage (2) and the inner cross-section of the pipe (12, 20) coincides with the inner cross-section of the portion (8) of the by-pass passage formed in the housing of the suction passage in which the flow detecting element (13) is provided whereby a stepless transition is attached and the air flow in the by-pass passage is not disturbed.

2. Air flow meter assembly according to claim 1, characterized in that the pipe (20) is bent to the axis of the venturi portion (3) and opens in a suction passage area defined by a projection of the venturi portion (3).

3. Air flow meter assembly according to claim 1 or 2, characterized in that a grid (14) is provided in the pipe (12, 20).

## Patentansprüche

1. Luftdurchflußmesser für das Ansaugsystem von Brennkraftmaschinen, umfassend:
einen Luftfilter (1); eine Drosselklappe (4); einen Saugkanal (2) mit einem Lufttrichter aufstrom von der Drosselklappe; einen Bypasskanal (8, 12; 20), dessen Eintrittsöffnung aufstrom vom Lufttrichter (3) liegt und dessen Austrittsöffnung (11) in den Lufttrichter (3) mündet, und einen Luftstromfühler (13), der von einem wärmeempfindlichen Widerstand gebildet und im Bypasskanal (8, 12; 20) angeordnet ist, wobei ein Abschnitt des Bypasskanals an der Aufstromseite des Fühlers durch ein Rohr (12, 20) gebildet ist und die Länge des Bypasskanals aufstrom vom Fühler wenigstens doppelt so groß wie der Durchmesser (D) des Bypasskanals ist,
dadurch gekennzeichnet,
daß das Rohr in den Saugkanal (2) ragt und der Innenquerschnitt des Rohrs (12, 20) mit dem Innenquerschnitt des Abschnitts (8) des Bypasskanals, der in dem Gehäuse der Saugleitung gebildet ist, in dem der Luftstromfühler (13) vorgesehen ist, zusammenfällt, so daß ein stufenloser Übergang erhalten und der Luftstrom im Bypasskanal nicht gestört wird.

2. Luftdurchflußmesser nach Anspruch 1, dadurch gekennzeichnet, daß das Rohr (20) zur Achse des Lufttrichters (3) umgebogen ist und in einen Saugkanalbereich mündet, der von einem Vorsprung des Lufttrichters (3) gebildet ist.

3. Luftdurchflußmesser nach Anspruch 1 oder 2, dadurch gekennzeichnet, daß in dem Rohr (12, 20) ein Gitter (14) vorgesehen ist.

## Revendications

1. Ensemble formant débitmètre d'air pour un système d'aspiration d'air de moteurs à combustion interne, comprenant:
un épurateur d'air (1); une vanne papillon (4); un passage d'aspiration (2) comportant une partie formant venturi située en amont de la vanne papillon; un passage de dérivation (8, 12; 20), dont l'ouverture d'admission est située en amont de la partie formant venturi (3) et dont l'ouverture de sortie (11) débouche dans la partie formant venturi (3), et un élément (13) de détection de l'écoulement d'air, constitué par une résistance thermosensible et disposé dans le passage de dérivation (8, 12; 20), une partie du passage de dérivation située sur le côté amont de l'élément de détection étant constituée par une tubulure (12, 20), et la longueur du passage de dérivation en amont de l'élément de détection étant égale au moins au double du diamètre (D) du passage de dérivation,
caractérisé en ce que
la tubulure pénètre dans le passage d'aspiration (2) et la section transversale intérieure de la tubulure (12, 20) coïncide avec la section transversale intérieure de la partie (8) du passage de dérivation, ménagée dans le logement du passage d'aspiration, dans lequel l'élément (13) de détection de l'écoulement est prévu, ce qui permet d'obtenir une transition progressive et un écoulement d'air non pertubé dans le passage de dérivation.

2. Ensemble formant débitmètre d'air selon la revendication 1, caractérisé en ce que la tubulure (20) est coudée en direction de l'axe de la partie formant venturi (3) et débouche dans une zone du passage d'aspiration, définie par un élément saillant de la partie formant venturi (3).

3. Ensemble formant débitmètre d'air selon la revendication 1 ou 2, caractérisé en ce qu'une grille (14) est disposée dans la tubulure (12, 20).

FIG. 1

CONTROL UNIT

$Q_A$

FIG. 2

## FIG. 3A

## FIG. 3B